# EUROPÄISCHE PATENTSCHRIFT

(11) **EP 2 865 500 B1**
(45) Veröffentlichungstag und Bekanntmachung des Hinweises auf die Patenterteilung: **15.03.2017**
(21) Anmeldenummer: 13190539.0
(22) Anmeldetag: 28.10.2013
(51) Int. Cl.: B26D 3/28

(54) **Glätten eines Kunststoffspritzgussteils**
Smoothing of an injection-moulded plastic part
Lissage d'une pièce en matière synthétique moulée par injection

(43) Veröffentlichungstag der Anmeldung: 29.04.2015
(73) Patentinhaber: Franz Oberflächentechnik GmbH & Co. KG, 82538 Geretsried (DE)
(72) Erfinder: Wolf-Dieter, Franz, 82538 Geretsried (DE)
(74) Vertreter: Szynka, Dirk

(56) Entgegenhaltungen:
- EP-A1- 2 226 172
- EP-A2- 0 295 458
- DE-A1-102010 003 176

## Beschreibung

Die vorliegende Erfindung betrifft ein Verfahren zum Glätten einer Oberfläche eines Kunststoffspritzgussteils als Vorbereitung für einen Beschichtungsprozess.

Ein solches Kunststoffspritzgussteil, nachstehend der Einfachheit halber "Spritzgussteil", kann zum Beispiel den Grundkörper für ein Bauteil bilden, dessen Oberfläche nach der Beschichtung eine Sichtfläche zur Verfügung stellt. Das entsprechende Bauteil kann dann beispielsweise als dekoratives bzw. funktionaldekoratives Element im Fahrzeuginnenraum vorgesehen sein. Bei der Herstellung des Grundkörpers, also beim Spritzgießen, wird einer von Formwerkzeugen begrenzten Kavität fließfähiges Kunststoffmaterial zugeführt, das darin vor dem Entformen zumindest teilweise aushärtet. In einem Bereich, in dem die Formwerkzeuge aneinandergrenzen, kann es dabei zur Ausbildung eines Grats an der Oberfläche des Spritzgussteils kommen, beispielsweise wenn die Formwerkzeuge leicht abgerundete Kanten haben.

Aus der EP 2 226 172 A1, die dem Oberbegriff zugrundeliegt, ist zum Entgraten eines Kunststoffspritzgussteils ein Schneidwerkzeug bekannt, dessen Schneidteil einen Keilwinkel von rund 20 ° hat, bei anderen Ausführungsformen auch 35 ° und maximal 40 °. Beim Entgraten wird dieses Schneidteil dann senkrecht zur Vorschubrichtung in Vibration versetzt, und zwar mit einer Frequenz im Ultraschallbereich.

Der vorliegenden Erfindung liegt die Aufgabe zugrunde, ein vorteilhaftes Verfahren zum Glätten einer Oberfläche eines Spritzgussteils als Vorbereitung für ein Beschichten mit einer Metallschicht anzugeben.

Erfindungsgemäß löst diese Aufgabe ein Verfahren gemäß Anspruch 1.

Bevorzugte Ausgestaltungen finden sich in der nachstehenden Beschreibung und in den abhängigen Ansprüchen, wobei nicht immer im Einzelnen zwischen der Darstellung von Verfahrens- und Verwendungsaspekten unterschieden wird; jedenfalls implizit ist die Offenbarung hinsichtlich beider Kategorien zu lesen.

Erfindungsgemäß wird die Oberfläche des Spritzgussteils mit einem geometrisch bestimmten Schneidwerkzeug behandelt, dessen Schneidteil also im Rahmen des technisch Möglichen exakt definiert ist, um dann ohne vorherige Nachbearbeitung mit einer geometrisch unbestimmten Schneide beschichtet zu werden.

Aus dem Stand der Technik ist indes bekannt, die Oberfläche eines Spritzgussteils vor dem Beschichten mit einem Schleifmittel zu glätten, also mit einem geometrisch unbestimmten Schneidwerkzeug zu bearbeiten. Der Erfinder hat allerdings festgestellt, dass es hierbei insbesondere im Falle einer höheren Relativgeschwindigkeit zwischen Schleifmittel und Spritzgussteil zu einer lokalen Überhitzung und folglich zu "Aufschmelzungsausbrüchen" an der Oberfläche des Spritzgussteils kommen kann; infolge der Überhitzung tritt lokal Kunststoffmaterial aus und erstarrt dann. Das Ergebnis sind Unebenheiten an der Oberfläche, die insbesondere nach dem Aufbringen einer metallischen Beschichtung das Erscheinungsbild auch makroskopisch stören können, beispielsweise aufgrund von Lichtreflexen. Wird andererseits die Relativgeschwindigkeit zur Vermeidung einer Überhitzung deutlich reduziert, hat dies für den Durchsatz und damit insbesondere in einer Massenfertigung erhebliche Nachteile.

Der Ansatz des Erfinders geht deshalb dahin, das Schleifen durch einen spanabhebenden Schritt mit einem geometrisch bestimmten Schneidwerkzeug zu ersetzen. Das Schneidwerkzeug ist insoweit bestimmt, als der Winkel zwischen Spanund Freifläche dessen Schneidteils, also der Keilwinkel, im Rahmen der üblichen Präzision vorgegeben ist. Der Keilwinkel soll mindestens 55 °, in dieser Reihenfolge zunehmend bevorzugt mindestens 60 °, 65 °, 66 °, 67 °, 68 ° bzw. 68 ° bzw. 69 °, betragen. Der Erfinder hat diese Werte als insoweit optimal ermittelt, als im Falle eines zu klein gewählten Keilwinkels ein sich zum Teil ein Stück weit eingrabendes Schneidteil beobachtet wurde, was dann beispielsweise einen leicht gewellten Oberflächenverlauf zur Folge haben kann. Da vor dem Beschichten eben nicht noch geschliffen wird, kann sich diese Welligkeit dann auch im makroskopischen Erscheinungsbild (Reflexe, siehe oben) niederschlagen.

Andererseits hat sich auch eine Begrenzung des Keilwinkels nach oben als vorteilhaft erwiesen und soll dieser vorzugsweise höchstens 80 °, in dieser Reihenfolge zunehmend bevorzugt höchstens 79 °, 78 °, 77 °, 76 °, 75 °, 74 °, 73 ° bzw. 72 °, betragen. Im Falle eines zu groß gewählten Keilwinkels hat der Erfinder nämlich einen Materialabtrag eher durch Abschaben als durch Schneiden beobachtet; das Schneidwerkzeug kann beispielsweise auch verspringen. Im Ergebnis kann jedenfalls wiederum eine derartig wenig gleichmäßig geglättete Oberfläche vorliegen, dass diese nicht ohne zusätzliche Nachbearbeitung zum Beschichten geeignet ist.

Als ebenfalls hinsichtlich einer möglichst gleichmäßigen Glättung der Oberfläche vorteilhaft hat sich die Begrenzung der Relativgeschwindigkeit von Schneidteil und Spritzgussteil beim Abtragen des Spans erwiesen; diese soll nicht mehr als 1 m/s, in dieser Reihenfolge zunehmend bevorzugt nicht mehr als 0,9 m/s, 0,8 m/s, 0,7 m/s, 0,6 m/s bzw. 0,5 m/s, betragen. Betrachtet wird dabei die Relativgeschwindigkeit zwischen der Schneide und der Oberfläche des Spritzgussteils, von welcher der Span abgetragen wird. In bevorzugter Ausgestaltung ruht das Schneidwerkzeug, wird also allein das Spritzgussteil bewegt und entlang des ruhenden Schneidteils geführt.

Die im Rahmen dieser Offenbarung zu Keil-, Frei- und Spanwinkel getroffenen Angaben beziehen sich auf den wirksamen Teil des Schneidwerkzeugs, also auf den Schneidteil. Hinsichtlich einer Festlegung dieser Begriffe und Bezeichnungen wird auch verwiesen auf DIN 6581. Die Spanfläche ist jene Fläche des Schneidteils, auf welcher der Span abläuft. Die Freifläche liegt der Spanfläche entgegengesetzt, ist also der neu entstehenden Spritzgussteiloberfläche, also der Schnittfläche, zugewandt; Span- und Freifläche werden in dieser Offenbarung auch als "Schneidflächen" bezeichnet. Generell wird bei dieser Betrachtung von einer technisch sinnvollen Idealisierung ausgegangen, kann also etwa die Schneide, also die Kante zwischen Span- und Freifläche, bei mikroskopischer Betrachtung, insbesondere im Submikrometerbereich, durchaus auch eine gewisse Rundung haben. Die Angaben sollen insoweit also beispielsweise mindestens bis zu einer Größenskala von 100 µm, 10 µm, 1 µm, 0,1 µm bzw. 0,01 µm gelten.

Generell betrifft das "in Kontaktlage Verschieben" von Schneidteil und Spritzgussteil eine Relativbewegung der beiden, bei welcher sie sich berühren und derart zueinander orientiert sind, dass ein Span abgetragen wird. Vorzugsweise beträgt der Freiwinkel, also der Winkel zwischen Freifläche und Schnittfläche, dabei höchstens 4,5 °, in dieser Reihenfolge zunehmend bevorzugt höchstens 4 °, 3,5 °, 3 °, 2,5 ° bzw. 2 °. Eine mögliche Untergrenze des Freiwinkels kann beispielsweise bei 0,5 ° liegen, wobei mindestens 1 ° bzw. 1,5 ° weiter bevorzugt sind.

In einer zur Bewegungsbahn der Relativbewegung senkrechten Schnittebene betrachtet kann der Schneidteil beispielsweise auch eine Krümmung haben und entsprechend zum Glätten eines Spritzgussteils mit einer in derselben Schnittebene betrachtet gekrümmten Oberfläche vorgesehen sein. Der Krümmungsradius des Schneidteils kann dabei etwas größer als jener der Oberfläche gewählt werden, beispielsweise um mindestens 10% bzw. 20 % (mögliche Obergrenzen können insoweit etwa bei höchstens 50 %, 40 % bzw. 30 % liegen).

In bevorzugter Ausgestaltung werden Schneidteil und Kunststoffspritzgussteil derart in Kontaktlage relativ verschoben, dass sich die beiden in dem Oberflächenbereich, von dem der Span abgetragen wird, nur genau einmal während des in Kontaktlage Verschiebens berühren. Anders ausgedrückt soll also die bei der spanabhebenden Bewegung entstehende Schnittfläche dann ihrerseits nicht selbst abgetragen werden (so wie es beispielsweise bei wiederholtem Schneiden oder etwa einem Fräsprozess der Fall wäre); mit den erfindungsgemäß gewählten Parametern wird also idealerweise ein derart definierter Abtrag erreicht, dass nach dem Abheben des Spans die Oberfläche bereits hinreichend glatt ist. Vorzugsweise berühren sich Schneidteil und Spritzgussteil überhaupt nur ein Mal, wird also nach Aufheben der Kontaktlage kein erneuter Kontakt hergestellt, sondern nur von genau einem Oberflächenbereich je Spritzgussteil genau ein Span abgetragen.

In bevorzugter Ausgestaltung ist eine Bewegungsbahn der Relativverschiebung in Kontaktlage eine gerade Linie; es wird also vorzugsweise eine in einer die Bewegungsbahn beinhaltenden Schnittebene betrachtet gerade Fläche geglättet. Bei der Ermittlung dieser Linearität werden nur die mittleren 80 % bzw. 90 % der Bewegungsstrecke betrachtet, über welche der Spanabtrag erfolgt; es bleibt also zum Beispiel außer Betracht, wenn Schneidteil und Spritzgussteil im Anschluss auseinanderbewegt werden, der Span dabei aber noch an dem Schneidteil anliegt.

Eine weitere bevorzugte Ausgestaltung betrifft das Material des Schneidwerkzeugs. Vorzugsweise sollen nämlich zumindest die die Schneidflächen des Schneidteils bildenden Oberflächen aus einem polykristallinen Diamant (PKD) vorgesehen sein, besonders bevorzugt ist der Schneidteil durchgehend daraus vorgesehen. Soweit im Allgemeinen beispielsweise auch ein Schneidteil bzw. eine Beschichtung davon auf der Grundlage eines Saphir-, Karbid- bzw. Titan-Materials denkbar ist, hat sich der polykristalline Diamant indes als besonders vorteilhaft erwiesen.

Dies ist vorliegend insoweit überraschend, als die Relativgeschwindigkeit von Schneidteil und Spritzgussteil vergleichsweise gering ist, also nicht ein Erhöhen der Relativgeschwindigkeit ein härteres Schneidwerkzeug erforderlich macht. Dennoch hat der Erfinder festgestellt, dass für die Oberflächen des Schneidteils, vorzugsweise für das gesamte Schneidteil, eine Vickershärte von mindestens 5000 HV, weiter bevorzugt mindestens 5500 HV, 6000 HV, 6250 HV bzw. 6400 HV, bevorzugt sein kann, und zwar im Allgemeinen auch unabhängig vom polykristallinen Diamant (eine Alternative dazu kann beispielsweise kubisches Bornitrid sein). Vorteile können sich insofern insbesondere beim Glätten eines Spritzgussteils mit Glasfasern darin ergeben. Der Erfinder hat nämlich beobachtet, dass diese der mechanischen Verstärkung des Spritzgussteils dienenden Fasern zu einer signifikanten Abnutzung des Schneidwerkzeugs führen können. Im Ergebnis wären die Standzeiten verkürzt und wäre die Produktion aufgrund eines häufigen Werkzeugtausches öfter unterbrochen.

Bei einer bevorzugten Ausgestaltung wird der während des in Kontaktlage gegeneinander Verschiebens von Schneidteil und Spritzgussteil abgetragene Span abgeblasen, und zwar vorzugsweise mit ionisierter Luft. Das Abblasen ist generell schon insofern vorteilhaft, als der Span so aus dem Arbeitsbereich entfernt wird, also etwa im bevorzugten Fall eines feststehenden Schneidwerkzeugs nicht an diesem verbleibt und das Glätten eines nächsten Spritzgussteils beeinträchtigt. Die Verwendung ionisierter Luft dabei ist insbesondere vorteilhaft, weil so einer elektrostatischen Aufladung des Bauteils vorgebeugt werden kann; da die Oberfläche des Spritzgussteils vor der Beschichtung nicht weiter mechanisch bearbeitet wird, wird sie so also ein Stück weit gegen einen Verschmutzungseintrag zwischen Glätten und Beschichten "immunisiert".

Eine bevorzugte Weiterbildung davon betrifft das sequentielle Glätten einer Mehrzahl Spritzgussteile, wobei nach jedem Spritzgussteil ein jeweilig abgetragener Span abgeblasen wird, wiederum bevorzugt mit ionisierter Luft. Es werden also beispielsweise mindestens drei, fünf, sieben, neun bzw. zehn Spritzgussteile nacheinander mit demselben Schneidwerkzeug, insbesondere mit demselben Schneidteil, geglättet und wird nach dem Glätten eines jeden Spritzgussteils abgeblasen. Wie vorstehend dargestellt, wird also vorzugsweise je Spritzgussteil genau ein Span abgetragen und wird dieser jeweils am Ende des Glättvorgangs abgeblasen.

Generell können an einem Schneidwerkzeug auch eine Mehrzahl Schneidteile vorgesehen sein, etwa 2, 3, 4, 5, 6, 7 oder 8; vorzugsweise sind es nicht mehr als 4 Schneidteile, besonders bevorzugt ist genau eines.

Das erfindungsgemäße Glätten ist im Besonderen im Falle eines Spritzgussteils aus faserverstärktem Kunststoff, insbesondere glasfaserverstärktem Kunststoff, Annahme geht dahin, dass die Fasern beim Schleifen teils aus dem Kunststoff gerissen werden und dann zum Teil als Verschmutzung an der Oberfläche verbleiben. Demgegenüber scheinen die Fasern beim erfindungsgemäßen Glätten eher durchtrennt und mit dem Span von der Oberfläche abgehoben zu werden.

In bevorzugter Ausgestaltung wird ein für ein Kraftfahrzeug vorgesehenes Spritzgussteil erfindungsgemäß geglättet, insbesondere ein für den Innenraum eines Automobils vorgesehenes. Zum einen ist aufgrund der Anforderungen hinsichtlich einer Senkung des Kraftstoff- bzw. Energieverbrauchs die Implementierung von Leichtbaukonzepten im Automobilbau generell von Interesse, also etwa auch den Karosseriebau betreffend. Insbesondere im Innenraum können besondere Anforderungen an die Oberflächenqualität bestehen, sodass beispielsweise schon kleinste Reflexe (siehe oben) als potentiell störend gewertet werden. Mit dem erfindungsgemäßen Glätten kann nun einerseits eine Oberfläche besonderer Güte zur Verfügung gestellt werden (die Sichtfläche); andererseits wird die entgegengesetzte Oberfläche vorzugsweise weder erfindungsgemäß geglättet noch konventionell geschliffen. Dies ist zum Einen in Kostenhinsicht vorteilhaft, weil schlichtweg ein Bearbeitungsschritt eingespart wird, und zum Anderen wird durch den Verzicht auf das Schleifen (einer anderen als der geglätteten Oberfläche) auch der Gefahr einer Kreuzkontamination vorgebeugt.

Die Erfindung betrifft insbesondere auch ein Verfahren zum Beschichten eines Spritzgussteils mit einer Metallschicht, wobei die Oberfläche vor dem Beschichten in erfindungsgemäßer Weise geglättet und das Spritzgussteil dem Beschichtungsprozess dann ohne vorherige Nachbearbeitung der Oberfläche mit einem geometrisch unbestimmten Schneidwerkzeug zugeführt wird. Zum "Beschichtungsprozess" zählen insofern nicht nur der Schritt, in dem die Metallschicht bzw. die Metallschichten aufgebracht wird/werden, sondern auch der Konditionierung der Oberfläche dafür dienende Schritte.

In bevorzugter Ausgestaltung wird das Beschichten mit der Metallschicht in einem Bad durchgeführt.

Im bevorzugten Fall der Aufbringung der Metallschicht in einem Bad, insbesondere auch durch galvanische Abscheidung oder eine Kombination aus chemischer und galvanischer Abscheidung, kann zum Beispiel eine chemische Vorbehandlung erfolgen, etwa eine Sulfonierung oder eine Beizung in Chromsäure. Im Anschluss an eine Bekeimung kann beispielsweise eine Nickelschicht zunächst chemisch, also außenstromlos, abgeschieden werden, die dann galvanisch verstärkt werden kann, etwa mit Nickel oder Kupfer. Anschließend kann das Spritzgussteil zum Beispiel galvanisch verchromt werden. Die Erfindung betrifft auch die Verwendung eines Spritzgussteils, dessen Oberfläche in erfindungsgemäßer Weise geglättet wurde, zum Beschichten mit einer Metallschicht, insbesondere in einem Bad. Dabei wird das Spritzgussteil dem Beschichtungsprozess ohne vorherige Nachbearbeitung mit einem geometrisch unbestimmten Schneidwerkzeug zugeführt. Insbesondere richtet sich eine solche Verwendung auf ein als Kraftfahrzeugteil, insbesondere für den Innenraum eines Automobils, vorgesehenes Spritzgussteil.

Im Folgenden wird die Erfindung anhand von Ausführungsbeispielen näher erläutert, wobei die einzelnen Merkmale auch in anderer Kombination erfindungswesentlich sein können und die Offenbarung weiterhin hinsichtlich aller Anspruchskategorien zu lesen ist.

Im Einzelnen zeigt
- Fig.1a: das für das erfindungsgemäße Verfahren verwendete Schneidwerkzeug in einer Seitenansicht;
- Fig.1b: eine vergrößerte Darstellung zu Fig. 1a;
- Fig. 2: das Schneidwerkzeug gemäß Fig. 1 in einer Aufsicht;
- Fig. 3: ein entlang des Schneidwerkzeugs bewegtes Spritzgussteil in einer schematischen Schnittdarstellung.

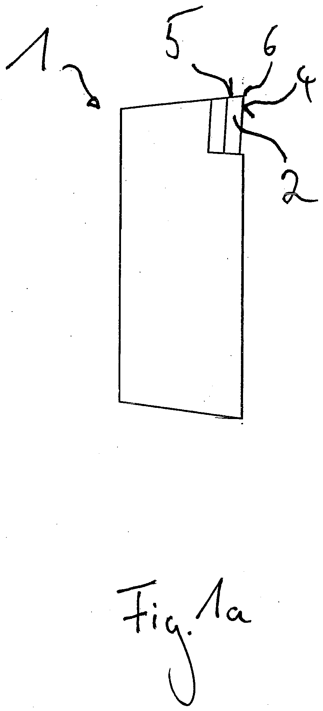

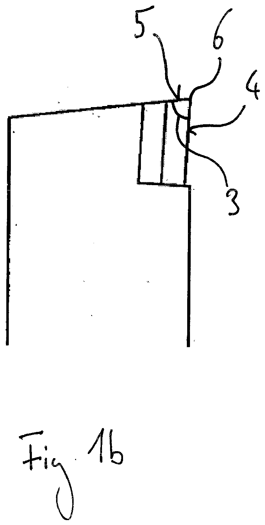

Fig. 1 a zeigt ein für das erfindungsgemäße Glätten besonders geeignetes Schneidwerkzeug 1, dessen Schneidteil 2 einen Keilwinkel 3 von 80 ° hat.

Der Keilwinkel 3 ist der zwischen der Spanfläche 4, entlang welcher der Span abläuft, und der Freifläche 5 eingeschlossene Winkel des Schneidteils 2. Dabei bleibt eine bei mikroskopischer Betrachtung gegebenenfalls vorliegende Verrundung der Schneidkante 6 außer Betracht.

Der Schneidteil 2 ist aus einem polykristallinen Diamant mit einer Vickershärte von circa 6500 HV vorgesehen.

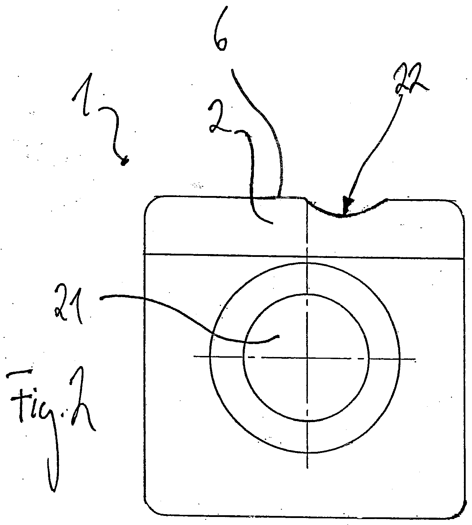

Fig. 2 zeigt eine Aufsicht auf das Schneidwerkzeug 1, und zwar bezogen auf Fig. 1 a von rechts darauf blickend. Zum Einen ist in dieser Darstellung in dem Schneidwerkzeug 1 ein mittiges Durchgangsloch 21 zu erkennen, in welches eine Schraube gesetzt werden kann; das Schneidwerkzeug 1 kann darüber also an einer Glättvorrichtung befestigt werden.

In Fig. 2 ist ferner obenseitig eine Ausnehmung 22 im Schneidteil 2 zu erkennen. Diese Ausnehmung 22 erstreckt sich in vertikaler Richtung um 0,6 mm nach unten und hat eine Kreissektorform. Der zugrunde liegende Radius beträgt dabei 2,5 mm, der Kreismittelpunkt liegt also 1,9 mm in vertikaler Richtung nach oben gegenüber der übrigen Schneidkante 6 versetzt. In horizontaler Richtung erstreckt sich die Ausnehmung 22 über 3 mm.

Die Ausnehmung 22 ist im Schneidteil 2 vorgesehen, weil das vorliegend zu glättende Spritzgussteil auch ein abschnittsweise kreisförmiges Profil hat, und zwar in einer zur Erstreckungsrichtung des Grats senkrechten Schnittebene betrachtet. In diesem abschnittsweise kreisförmigen Profil ist auch der zu entfernende Grat angeordnet, wobei der Radius (der Oberfläche des Spritzgussteils) in etwa 2 mm beträgt.

Das Bauteil wird also in der Ausnehmung 22 entlang des Schneidteils 2 geführt; würde es indes in einem geraden Abschnitt des Schneidteils 2 geglättet, hätte dies eine nicht gewünschte Abflachung seines Profils zur Folge.

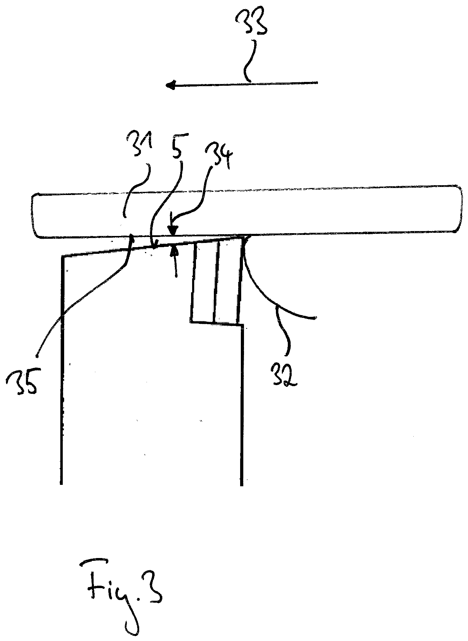

Fig. 3 zeigt in einer schematischen Schnittdarstellung, wie das Spritzgussteil 31 entlang des Schneidteils 2 bewegt und dabei ein Span 32 abgehoben wird. Das Spritzgussteil 31 wird dabei in der Bewegungsrichtung 33 mit einer Geschwindigkeit von circa 0,4 m/s relativ zum Schneidteil 2 bewegt.

Dabei beträgt der Freiwinkel 34, also der Winkel zwischen der durch das Abtragen des Spans 32 neu entstandenen Schnittfläche 35 und der Freifläche 5, in etwa 2 °. Der Spanwinkel beträgt circa 8 °.

## Patentansprüche

1. Verfahren zum Glätten einer Oberfläche eines Kunststoffspritzgussteils (31) als Vorbereitung für ein Beschichten mit einer Metallschicht,
mit den Schritten:
- Vorsehen eines geometrisch bestimmten Schneidwerkzeugs (1), dessen Schneidteil (2) einen Keilwinkel (3) von mindestens 45 ° hat;
- Halten des Kunststoffspritzgussteils (31) mit einem Haltewerkzeug;
- in Kontakt Bringen des Schneidteils (2) mit dem Kunststoffspritzgussteil (31);
- in Kontaktlage gegeneinander Verschieben von Schneidteil (2) und Kunststoffspritzgussteil (31) zum Abtragen eines Spans (32), und zwar mit einer Relativgeschwindigkeit von höchstens 1 m/s;
- Aufheben des Kontakts zwischen Schneidteil (2) und Kunststoffspritzgussteil (31),
um das Kunststoffspritzgussteil (31) dann dem Beschichtungsprozess ohne vorherige Nachbearbeitung der Oberfläche mit einem geometrisch unbestimmten Schneidwerkzeug zuzuführen.

2. Verfahren nach Anspruch 1, bei welchem der Keilwinkel (3) des Schneidteils (2) höchstens 80 ° beträgt.

3. Verfahren nach Anspruch 1 oder 2, bei welchem der Schneidteil (2) und das Kunststoffspritzgussteil (31) so in Kontakt gebracht und in Kontaktlage gegeneinander verschoben werden, dass der Freiwinkel (34) höchstens 5 ° beträgt.

4. Verfahren nach einem der vorstehenden Ansprüche, bei welchem der Schneidteil (2) und das Kunststoffspritzgussteil (31) so in Kontaktlage gegeneinander verschoben werden, dass eine Schnittfläche (35), die beim Abtragen des Spans (32) entsteht, ihrerseits nicht selbst abgetragen wird.

5. Verfahren nach einem der vorstehenden Ansprüche, bei welchem der Schneidteil (2) und das Kunststoffspritzgussteil (31) so in Kontaktlage gegeneinander verschoben werden, dass eine Bewegungsbahn der Relativverschiebung beim Abtragen des Spans (32) eine gerade Linie ist.

6. Verfahren nach einem der vorstehenden Ansprüche, bei welchem zumindest die die Schneidflächen (4, 5) des Schneidteils (2) bildenden Oberflächen aus einem polykristallinen Diamant vorgesehen sind.

7. Verfahren nach einem der vorstehenden Ansprüche, bei welchem der Schneidteil (2) und das Kunststoffspritzgussteil (31) in Kontaktlage gegeneinander verschoben werden, indem das Kunststoffspritzgussteil (31) an dem Schneidteil (2) entlang bewegt wird, der seinerseits dabei selbst nicht bewegt wird.

8. Verfahren nach einem der vorstehenden Ansprüche, bei welcher der während des in Kontaktlage gegeneinander Verschiebens von Schneidteil (2) und Kunststoffspritzgussteil (31) vom Kunststoffspritzgussteil (31) abgetragene Span (32) abgeblasen wird, vorzugsweise mit ionisierter Luft.

9. Verfahren nach Anspruch 8 zum Glätten der Oberflächen einer Mehrzahl Kunststoffspritzgussteile (31), die sequentiell geglättet werden, wobei nach jedem Kunststoffspritzgussteil (31) ein jeweilig abgetragener Span (32) abgeblasen wird, vorzugsweise mit ionisierter Luft.

10. Verfahren nach einem der vorstehenden Ansprüche, bei welchem das Kunststoffspritzgussteil (31) aus einem faserverstärkten Kunststoff besteht, insbesondere aus einem glasfaserverstärkten Kunststoff.

11. Verfahren nach einem der vorstehenden Ansprüche, bei welchem das Kunststoffspritzgussteil (31) für ein Kraftfahrzeug, insbesondere für den Innenraum eines Automobils, vorgesehen ist.

12. Verfahren zum Beschichten eines Kunststoffspritzgussteils (31) mit einer Metallschicht in einem Bad, bei welchem die Oberfläche des Kunststoffspritzgussteils (31) vor dem Beschichten mit einem Verfahren nach einem der vorstehenden Ansprüche geglättet wird.

13. Verwendung eines Kunststoffspritzgussteils (31), dessen Oberfläche in einem Verfahren nach einem der vorstehenden Ansprüche geglättet wurde, zum Beschichten mit einer Metallschicht, vorzugsweise in einem Bad, bei welcher Verwendung das Kunststoffspritzgussteil (31) dem Beschichtungsprozess ohne vorherige Nachbearbeitung mit einem geometrisch unbestimmten Schneidwerkzeug zugeführt wird.

14. Verwendung nach Anspruch 13, bei welcher das Kunststoffspritzgussteil (31) ein Kraftfahrzeugteil ist, insbesondere ein Kraftfahrzeugteil für den Innenraum eines Automobils.

## Claims

1. A method for smoothing a surface of a synthetic material injection molded part (31) as a preparation for a coating with a metal layer,
comprising the steps:
- providing a geometrically defined cutting tool (1), a cutting part (2) of said cutting tool having a wedge angle (3) of at least 45 °;
- holding said synthetic material injection molded part (31) by a holding tool;
- bringing said cutting part (2) into a contact with said synthetic material injection molded part (31);
- displacing said cutting part (2) and said synthetic material injection molded part (31) with respect to each other while being in contact with each other for removing a chip (32), namely with a relative velocity of not more than 1 ms;
- finishing said contact between said cutting part (2) and said synthetic material injection molded part (31),
for feeding said synthetic material injection molded part (31) to said coating then without a post processing of said surface by a geometrically undefined cutting tool prior to said coating.

2. The method according to claim 1, wherein said wedge angle (3) of said cutting part (2) amounts to 80° at maximum.

3. The method according to claim 1 or 2, wherein said cutting part (2) and said synthetic material injection molded part (31) are brought into said contact with each other and displaced with respect to each other while being in contact with each other in such a way that a relief angle (34) amounts to 5° at maximum.

4. The method according to one of the preceding claims, wherein said cutting part (2) and said synthetic material injection molded part (31) are displaced with respect to each other while being in contact with each other in such a way that a cut face (35) formed while removing said chip (32) is not removed itself.

5. The method according to one of the preceding claims, wherein said cutting part (2) and said synthetic material injection molded part (31) are displaced with respect to each other while being in contact with each other in such a way that a path of movement of said displacement with respect to each other is, while said removing of said chip (32), a straight line.

6. The method according to one of the preceding claims, wherein at least the surfaces of said cutting part (2), which form the cutting faces (4, 5) of said cutting part (2), are made of a polycrystalline diamond.

7. The method according to one of the preceding claims, wherein said cutting part (2) and said synthetic material injection molded part (31) are displaced with respect to each other while being in contact with each other by moving said synthetic material injection molded part (31) along said cutting part (2), said cutting part itself being not moved therein.

8. The method according to one of the preceding claims, wherein said chip (32) being removed from said synthetic material injection molded part (31) while said cutting part (2) and said synthetic material injection molded part (31) are displaced with respect to each other while being in contact with each other is blown off, preferably by ionized air.

9. The method according to claim 8, wherein a plurality of synthetic material injection molded parts (31) are smoothed sequentially, while after each synthetic material injection molded part (31) a chip (32) removed respectively is blown off, preferably by ionized air.

10. The method according to one of the preceding claims, wherein said synthetic material injection molded part (31) consists of a fiber-reinforced synthetic material, in particular of a glass fiber-reinforced synthetic material.

11. The method according to one of the preceding claims, wherein said synthetic material injection molded part (31) is provided for a motor vehicle, in particular for the interior of a car.

12. A method for coating a synthetic material injection molded part (31) with a metal layer in a bath, wherein a surface of said synthetic material injection molded part (31) is smoothed by a method according to one of the preceding claims prior to said coating.

13. A use of a synthetic material injection molded part (31), a surface thereof having been smoothed by a method according to one of the preceding claims, for a coating with a metal layer, preferably in a bath, in said use said synthetic material injection molded part (31) being fed to said coating without a post processing of said surface by a geometrically undefined cutting tool prior to said coating.

14. The use according to claim 13, wherein said synthetic material injection molded part (31) is a part of a motor vehicle, in particular a part of a motor vehicle for the interior of a car.

## Revendications

1. Procédé de lissage d'une surface d'une pièce en plastique moulée par injection (31) en préparation d'un revêtement par une couche métallique, comportant les étapes consistant à :
- disposer d'un outil de coupe (1) à géométrie spécifique, dont la partie coupante (2) possède un angle de taillant (3) d'au moins 45;
- immobiliser la pièce en plastique moulée par injection (31) à l'aide d'un outil de retenue;
- mettre en contact la partie coupante (2) et la pièce en plastique moulée par injection (31);
- déplacer mutuellement la partie coupante (2) et la pièce en plastique moulée par injection (31) en contact l'une avec l'autre pour enlever un copeau (32), à une vitesse relative ne dépassant pas 1 m/s;
- interrompre le contact entre la partie coupante (2) et la pièce en plastique moulée par injection (31),
afin de soumettre ensuite la pièce en plastique moulée par injection (31) au processus de revêtement sans autre retouche préalable de la surface avec un outil de coupe à géométrie non spécifique.

2. Procédé selon la revendication 1, dans lequel l'angle de taillant (3) de la partie coupante (2) ne dépasse pas 80°.

3. Procédé selon la revendication 1 ou 2, dans lequel la partie coupante (2) et la pièce en plastique moulée par injection (31) sont mises en contact et déplacées en contact mutuel de manière que l'angle de dépouille (34) ne dépasse pas 5°.

4. Procédé selon l'une des revendications précédentes, dans lequel la partie coupante (2) et la pièce en plastique moulée par injection (31) sont déplacées en contact mutuel de manière qu'une surface de coupe (35) produite lors de l'enlèvement du copeau (32) ne subisse pas elle-même d'enlèvement.

5. Procédé selon l'une des revendications précédentes, dans lequel la partie coupante (2) et la pièce en plastique moulée par injection (31) sont déplacées en contact mutuel de manière qu'une trajectoire du déplacement relatif se fasse en ligne droite lors de l'enlèvement du copeau (32).

6. Procédé selon l'une des revendications précédentes, dans lequel du diamant polycristallin est prévu au moins sur les surfaces formant les surfaces de coupe (4, 5) de la partie coupante (2).

7. Procédé selon l'une des revendications précédentes, dans lequel la partie coupante (2) et la pièce en plastique moulée par injection (31) sont déplacées en contact mutuel en déplaçant la pièce en plastique moulée par injection (31) le long de la partie coupante (2), cette dernière ne subissant elle-même aucun déplacement.

8. Procédé selon l'une des revendications précédentes, dans lequel le copeau (32) enlevé pendant le déplacement en contact mutuel de la partie coupante (2) et de la pièce en plastique moulée par injection (31) est retiré de la pièce en plastique moulée par injection (31) en étant soufflé, de préférence par d'air ionisé.

9. Procédé selon la revendication 8 permettant de lisser les surfaces d'une pluralité de pièces en plastique moulées par injection (31), lesquelles sont lissées successivement, un copeau (32) enlevé après chaque pièce en plastique moulée par injection (31) étant retiré en étant soufflé, de préférence par d'air ionisé.

10. Procédé selon l'une des revendications précédentes, dans lequel la pièce en plastique moulée par injection (31) se compose d'un plastique renforcé de fibres, notamment d'un pastique renforcé de fibres de verre.

11. Procédé selon l'une des revendications précédentes, dans lequel la pièce en plastique moulée par injection (31) est destinée à un véhicule automobile, notamment à l'habitacle d'une automobile.

12. Procédé de revêtement d'une pièce en plastique moulée par injection (31) par une couche métallique dans un bain, dans lequel la surface de la pièce en plastique moulée par injection (31) est lissée suivant le procédé selon l'une des revendications précédentes préalablement audit revêtement.

13. Utilisation d'une pièce en plastique moulée par injection (31), dont la surface a été lissée suivant un procédé selon l'une des revendications précédentes, et destinée à être revêtue d'une couche métallique, de préférence dans un bain, au cours de laquelle utilisation la pièce en plastique moulée par injection (31) est soumise au processus de revêtement sans autre retouche préalable avec un outil de coupe à géométrie non spécifique.

14. Utilisation selon la revendication 13, dans laquelle la pièce en plastique moulée par injection (31) est une pièce pour véhicule automobile, notamment une pièce pour véhicule automobile destinée à l'habitacle d'une automobile.
